# EUROPEAN PATENT SPECIFICATION

(11) **EP 2 604 904 B1**
(45) Date of publication and mention of the grant of the patent: **19.08.2015**
(21) Application number: 12195424.2
(22) Date of filing: 04.12.2012
(51) Int. Cl.: F16L 59/065, F16L 59/14

(54) **A vacuum insulated duct section**
Vakuumisolierter Leitungsabschnitt
Section de conduit isolée sous vide

(30) Priority: 14.12.2011 GB 201121487
(43) Date of publication of application: 19.06.2013
(73) Proprietor: Spirax-Sarco Limited, Cheltenham, Gloucestershire GL53 8ER (GB)
(72) Inventor: Rosagro, Joe, Cheltenham, GLoucestershire GL51 9NQ (GB)
(74) Representative: McCartney, Jonathan William

(56) References cited:
- EP-A1- 1 795 796
- WO-A2-2010/037827
- WO-A2-2011/158040
- DD-A1- 157 012
- DE-A1- 3 426 641
- DE-A1-102007 016 974
- GB-A- 2 139 311
- US-A- 3 364 649

## Description

The invention relates to a vacuum insulated duct section for conveying fluid sealed with a plug.

Many industrial companies maintain on-site steam plants for generating steam and then distributing the steam to one or more locations at the site where the energy contained in the steam is extracted for use in various thermal processes.

To optimise the efficiency of the steam distribution systems used to convey steam around a site, steps are normally taken to reduce heat loss from the hot parts of the system. To this end, typically, insulating material is placed around the outer surfaces of the hot parts, including the steam ducts or pipes that carry the steam. As is known, the insulation material usually comprises mineral wool, fibreglass or calcium silicate and the like.

DE 10 2007 016974 discloses a system having a vacuum insulation casing arranged between an inner container and an outer container that encloses the inner container with a distance. A getter material is provided in a container which ensures long run stability of the vacuum and the container is open to the vacuum. An evacuation opening is provided in a wall of the outer container which is closed by a plug. The container for the getter material is provided in the plug.

US 3,364,649 discloses a vacuum pump having coupling means for coupling to a container. The coupling means has a port which is arranged to be sealed by an occlusion element once vacuum pumping is complete. The occlusion element includes a getter capsule which may be ruptured by a pin.

WO 2010/037827 discloses an ultralow temperature container, in particular for a motor vehicle, comprising an inner container and an outer container, wherein the outer container is placed at a distance from the inner container so that an evacuatable jacket forms between them for thermal insulation purposes. The container also comprises a nozzle that penetrates the outer container and a plug for closing the nozzle. A getter as a gas capturing means is integrated with the plug for adsorption and/or absorption of gas from the jacket. The getter is capable of being connected fluidically with the jacket by way of the plug after closing the nozzle.

GB 2 139 311 discloses a vacuum insulated duct section according to the preamble of claim 1.

In a previously considered arrangement, which is described in our earlier patent application PCT/GB2011/051137 having a priority date of 18 June 2010 (published as WO 2011/158040 A2), a vacuum insulated duct section for conveying steam is provided. The vacuum insulated duct comprises an inner pipe for conveying the steam and an outer pipe enclosing the inner pipe and defining a vacuum chamber therebetween. A vacuum is maintained within the vacuum chamber so as to provide insulation to the inner steam pipe conveying the steam. In order to maintain the vacuum at a level that provides sufficient thermal insulation to the inner pipe, a getter is provided to remove gas from the vacuum chamber. In this previously considered arrangement, the getter is disposed within the vacuum chamber and comprises an enclosure accommodating a getter material, the enclosure having a port which is closed by a fusible closure element. The getter is mounted in such a position that it is in good thermal conductivity with the inner pipe. After the vacuum chamber has been degassed, the inner pipe can be heated to a temperature that is above the fusing temperature of the closure element so as to expose the getter material to the vacuum chamber through the port. However, heating of the inner pipe can cause the outgassing of hydrogen and other adsorbed gasses from the pipe, which the getter is then exposed to.

Whilst this is arrangement is suitable for many applications, some problems may exist. In order to ensure that the getter is not activated early, it is important to maintain the temperature of the duct section below the fusing temperature of the closure element. However, in many cases it is desirable to heat the duct section during degassing in order to reduce the time taken to degas by encouraging the outgassing of hydrogen and other adsorbed gasses from the inner and outer pipes. Further, it may be difficult to replace the getter on site if a failure occurs without shutting down the steam line and cutting open the duct section.

It is therefore be desirable to provide an improved arrangement that addresses at least some of the above problems to at least some extent.

The invention is defined in the attached independent claim to which reference should now be made. Further, optional sub-features are defined in the sub-claims appended thereto.

There is disclosed a plug for sealing a vacuum port of a vacuum chamber, comprising: a plug member for sealing the vacuum port; and a getter capsule containing a getter material and which is attached to the plug member such that in use it is disposed within the vacuum chamber; wherein the capsule is sealed with a seal which can be broken to expose the getter material to the vacuum chamber.

The seal may be a meltable seal which can be melted to expose the getter material. The meltable seal may comprise indium. The seal may be a frangible seal.

The getter capsule may be elongate and a proximal end of the getter capsule may be attached to the plug member. The getter capsule may extend in the general axial direction from the plug member. The axis of the getter capsule may be offset from the axis of the plug member. The meltable seal may be provided at or towards the distal end of the getter capsule.

The getter capsule may be a metal getter capsule. The getter capsule may be detachably attached to the plug member. The plug may be provided with an engagement portion with which a tool can be engaged. The plug may further comprise a seal disposed about the periphery of the plug member.

According to the invention there is provided a vacuum insulated duct section for conveying a fluid, comprising: an inner pipe for conveying the fluid; an outer pipe enclosing the inner pipe and defining a vacuum chamber therebetween; a vacuum port leading to the vacuum chamber through the outer pipe; a plug member sealing the vacuum port so as to maintain a vacuum within the vacuum chamber; and a getter capsule containing a getter material and which is attached to the plug member such that it is disposed within the vacuum chamber, wherein the getter material is exposed to the vacuum chamber through an opening in the getter capsule. The vacuum port is offset from the inner pipe so that the vacuum port axis of the vacuum port is offset from a centreline of the inner pipe.

The opening in the getter capsule may be a broken seal. The opening may be formed by melting a meltable seal. The getter capsule may comprise melted seal residue in the region of the opening. The opening may be formed by breaking a frangible seal.

The getter capsule may be elongate and a proximal end of the getter capsule may be attached to the plug member. The getter capsule may extend in the general axial direction from the plug member. The axis of the getter capsule may be offset from the axis of the plug member. The opening may be provided at or towards the distal end of the getter capsule. The getter capsule may be a metal getter capsule. The getter capsule may be detachably attached to the plug member.

The plug may be provided with an engagement portion with which a tool can be engaged. The plug may further comprise a seal disposed about the periphery of the plug member between the plug member and the vacuum port.

The vacuum port axis may be offset from the longitudinal centreline of the inner pipe. The vacuum port axis may be offset from the centreline of the inner pipe in a direction that is perpendicular to both the vacuum port axis and the centreline. The vacuum port axis may be generally perpendicular to the longitudinal centreline of the inner pipe.

The inner and outer pipes may be substantially coaxial. The vacuum port may be a tubular vacuum port which extends from the outer pipe.

The getter capsule may be offset from a centreline of the inner pipe and may be disposed to the side of the inner pipe. The getter capsule may be elongate and may have a length greater than the spacing between the inner and outer pipes.

There is also disclosed a vacuum insulated duct section for conveying a fluid, comprising: an inner pipe for conveying the fluid; an outer pipe enclosing the inner pipe and defining a vacuum chamber therebetween; and a vacuum port leading to the vacuum chamber through the outer pipe and offset from the inner pipe so that the vacuum port axis of the vacuum port is offset from a centreline of the inner pipe.

The vacuum port axis may be offset from the longitudinal centreline of the inner pipe. The vacuum port axis may be offset from the centreline of the inner pipe in a direction that is perpendicular to both the vacuum port axis and the centreline. The vacuum port axis may be generally perpendicular to the longitudinal centreline of the inner pipe.

The inner and outer pipes may be substantially coaxial. The vacuum port may be a tubular vacuum port which extends from the outer pipe.

There is also provided an apparatus for degassing and sealing a vacuum chamber having a vacuum port with a plug comprising a plug member and a getter material sealed within a getter chamber by a breakable seal, the apparatus comprising: a vacuum source port arranged to be attached to a vacuum source; a plug chamber disposed on a first side of the vacuum source port and arranged to accommodate the plug member of the plug in a retracted position, a suction port disposed on a second opposing side of the vacuum source port and arranged to be attached to the vacuum port such that the vacuum source can degas the vacuum chamber; and a breaker which is arranged to break the breakable seal; wherein the apparatus is configured such that the plug can be moved from the retracted position, in which the plug member is disposed within the plug chamber on the first side of the vacuum source port, through the suction port to an installed position in which the plug member is disposed within and seals the vacuum port.

The getter material may be sealed within the getter chamber by a meltable seal. The breaker may be a heater arranged to melt the meltable seal. The heater may be disposed on the second side of the vacuum source port. The heater may be an induction heater comprising an induction coil wrapped around a tube. The tube may comprise glass. The tube may be transparent.

The apparatus may be configured such that the plug can be moved axially from the retracted position to the installed position.

The apparatus may further comprise a tool arranged to move the plug from the retracted position to the installed position. The tool may comprise an axially moveable rod that is arranged to move the plug from the retracted position to the installed position. A distal end of the rod may be arranged to be engaged with the plug. The distal end of the rod may comprise engagement means which can be engaged with an engagement portion of the plug.

The plug chamber may comprise a variable volume chamber having a variable axial length and which is sealed at one end. The variable volume chamber may be a bellows such as a metal bellows or an elastomeric bellows.

The apparatus may be arranged to seal a vacuum port of a vacuum chamber with a plug in accordance with any statement herein.

The apparatus may be arranged to degas and seal the vacuum chamber of a vacuum insulated duct section for conveying a fluid, comprising an inner pipe for conveying the fluid; an outer pipe enclosing the inner pipe and defining a vacuum chamber therebetween; and a vacuum port leading to the vacuum chamber through the outer pipe.

The apparatus may be arranged to degas and seal the vacuum chamber of a vacuum insulated duct section in accordance with any statement herein.

There is also disclosed a kit of parts, comprising: a vacuum insulated duct section for conveying a fluid, comprising an inner pipe for conveying the fluid; an outer pipe enclosing the inner pipe and defining a vacuum chamber therebetween; and a vacuum port leading to the vacuum chamber through the outer pipe; and a plug for sealing the vacuum port of the duct section in accordance with any statement herein. The vacuum insulated duct section may be in accordance with any statement herein. The kit of parts may further comprise an apparatus for degassing and sealing the vacuum chamber with the plug, the apparatus in accordance with any statement herein.

There is also disclosed a method of degassing and sealing a vacuum chamber having a vacuum port with a plug comprising a plug member and a getter material sealed within a getter chamber by a breakable seal, the method comprising the steps of: degassing the vacuum chamber through the vacuum port to generate a vacuum, and within the vacuum: breaking the breakable seal of the getter chamber of the plug to expose the getter material; and moving the plug to an installed position such that the plug member is disposed within and seals the vacuum port, and such that the getter material is exposed to the vacuum chamber. The vacuum chamber may be heated during degassing.

The method may further comprise the steps of: coupling a vacuum source to a vacuum source port of a degassing and sealing apparatus; locating the plug in a retracted position in which the plug member of the plug is located on a first side of the vacuum source port; coupling a suction port disposed on a second opposing side of the vacuum source port to the vacuum port of the vacuum chamber; and operating the vacuum source to degas the vacuum chamber to generate the vacuum.

The plug may be axially moved to the installed position. The plug may be moved to the installed position using a tool. The method may further comprise the steps of engaging the tool with the plug, and subsequently disengaging the tool from the plug after the plug has been moved to the installed position.

The breakable seal of the getter chamber may be a meltable seal which is melted using a heater. The meltable seal may be melted using an induction heater. The breakable seal of the getter chamber may be a frangible seal which may be broken using a breaker.

It may be visually checked whether the meltable seal of the getter chamber has melted before the plug is moved to the installed position.

The method may be carried out using the degassing and sealing apparatus in accordance with any statement herein.

The plug in accordance with any statement herein may be used to seal the vacuum port.

There is also provided a method of degassing and sealing a vacuum insulated duct section for conveying a fluid comprising an inner pipe for conveying the fluid; an outer pipe enclosing the inner pipe and defining a vacuum chamber therebetween; and a vacuum port leading to the vacuum chamber through the outer pipe, with a plug comprising a plug member and a getter material sealed within a getter chamber by a meltable seal, the method comprising the method in accordance with any statement herein. The vacuum insulated duct section may be in accordance with any statement herein.

The invention is defined in the attached independent claim. Embodiments of the invention comprise the features of the attached independent claim and may comprise any combination of the further features and/or limitations referred to herein, except combinations of such features as are mutually exclusive.

Embodiments of the invention will now be described, by way of example, with reference to the accompanying drawings, in which:
Figure 1 schematically shows an isometric view of part of a vacuum insulated duct section;
Figure 2 schematically shows a cross-section view of the duct section of Figure 1;
Figure 3 schematically shows a side view of the plug used to seal the duct section of Figure 1;
Figure 4 schematically shows an isometric view of the plug of Figure 3;
Figure 5 schematically shows an isometric view of an apparatus which can be used to degas and seal a vacuum insulated duct section;
Figure 6 schematically shows a cross-sectional view of the apparatus of Figure 5;
Figure 7 schematically shows the apparatus of Figures 5 and 6 attached to the vacuum port of a duct section with a plug in a retracted position;
Figure 8 schematically shows the arrangement of Figure 7 with the plug in an installed position; and
Figure 9 schematically shows the arrangement of Figure 7 with the plug in an installed position detached from the rod.

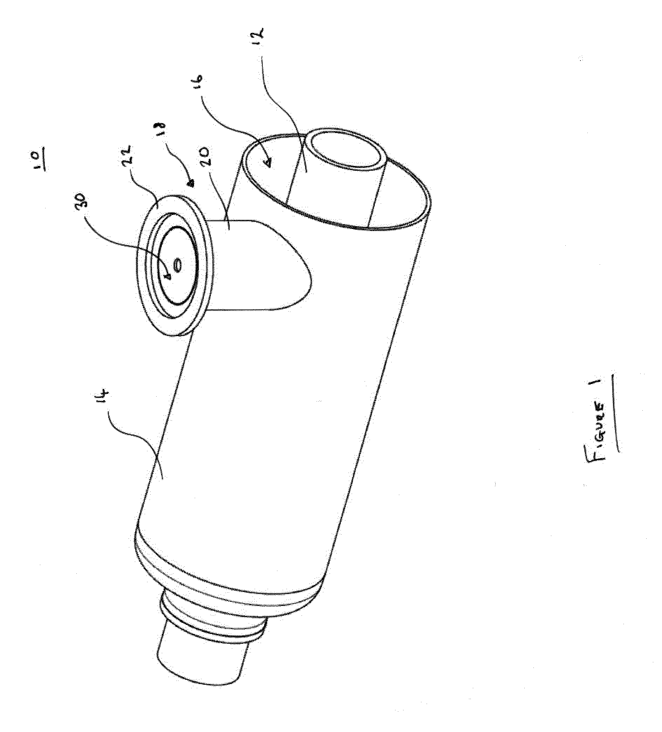

**Figure 1** shows part of a vacuum insulated duct section for conveying fluid 10 comprising an inner pipe 12 for conveying the fluid and an outer pipe 14 that encloses the inner pipe 12. The inner and outer pipes 12, 14 are cylindrical and are substantially coaxial with one another and are manufactured from stainless steel such as 304L. The outer pipe 14 defines a vacuum chamber 16 having a substantially annular cross-section between the inner and outer pipes 12, 14. In this embodiment, the duct section 10 is a vacuum insulated duct section for conveying steam and is intended to form part of a steam line conveying steam. In a steam plant, a number of duct sections 10 may be attached together in order to form a steam line. In use, a vacuum is maintained within the vacuum chamber 16 to provide thermal insulation to the inner pipe. The term "vacuum" as used throughout the description is intended to cover any vacuum (either perfect of partial) which provides thermal insulation to an inner pipe conveying fluid.

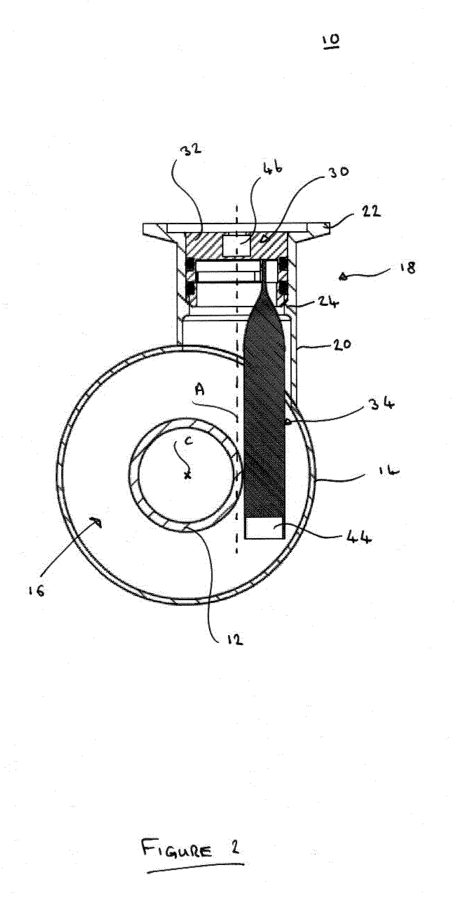

As shown in **Figure 2****,** the duct section 10 further comprises a vacuum port 18 that extends through the outer pipe 14 to the vacuum chamber 16. The vacuum port 18 comprises a tubular section 20 that is attached to the outer pipe 14 at a first end and is open at a second end. A flange 22 is provided at the second open end of the tubular section 20. An annular shoulder 24 is provided on the inner wall of the tubular section 20 and supports a sealing plug 30 which will be described in detail below.

The vacuum port 18 has a vacuum port axis A that is offset from the longitudinal centreline C of the inner pipe 12. Since in this embodiment the inner and outer pipes 12, 14 are coaxial, the vacuum port 18 is offset from the longitudinal centreline of the duct section 10. The tubular section 20 extends from the outer pipe 14 in a direction that is substantially perpendicular to the longitudinal centreline C of the duct section 10. Therefore, the vacuum port axis A is offset from the longitudinal centreline C of the duct section 10 (and inner pipe 12) in a direction that is perpendicular to both the vacuum port axis A and the centreline C.

As will be described in detail below, during commissioning of the duct section 10, the vacuum chamber 16 is degassed (or evacuated) through the vacuum port 18 so as to generate a vacuum within the vacuum chamber 16. A sealing plug 30 is then inserted into the vacuum port 18 so as to seal the vacuum port 18.

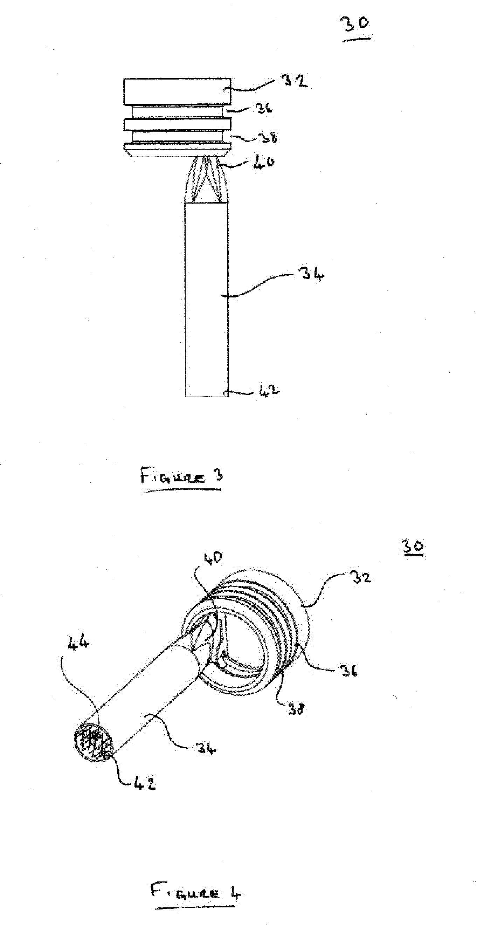

With reference to **Figures 3 and 4****,** the sealing plug 30 comprises a plug member 32 for sealing the vacuum port 18 and a getter capsule 34 that is attached to the plug member 32. The plug member 32 is made from stainless steel, is substantially cylindrical and is provided with two annular recesses 36, 38 on an outer surface which are arranged to receive O-ring seals (shown in Figure 1). The getter capsule 34 is also made from stainless steel and is a substantially cylindrical hollow tube that is attached to a lower surface of the plug member 32. The getter capsule 34 is elongate and extends from a position that is offset from the axis of the plug member 32 in a direction that is substantially parallel to the axis of the plug member 32. The longitudinal axis of the getter capsule 34 and the axis of the plug member 32 are therefore parallel to and offset from one another. In this particular embodiment, the getter capsule 34 is detachably attached to the plug member 32. However, it should be appreciated that the getter capsule 34 and plug member could be permanently attached to one another.

The getter capsule 34 is a substantially hollow cylindrical tube that is permanently sealed at its proximal end 40 (the end attached to the plug member 32). The interior of the getter capsule 34 is filled with a getter material such as barium. Before the plug 30 is installed during commissioning of the duct section 10, the lower distal end 42 of the getter capsule 34 is sealed with a breakable seal which in this embodiment is a meltable seal 44. The meltable seal in this embodiment is indium that seals the distal end 42 of the getter capsule 34. This prevents the getter material from reacting with the ambient surroundings before use. Although it has been described that the breakable seal is a meltable seal, the breakable seal could be a frangible seal.

As best shown in Figure 1, the upper surface of the plug member 32 is provided with an engagement portion 46 with which an installation tool can be engaged. In this embodiment the engagement portion 46 is an undercut.

Referring back to Figure 2, when the plug 30 is in the installed position in which it seals the vacuum port 18, the plug member 32 acts to seal the vacuum port 18 and the getter capsule 34 is disposed within the vacuum chamber 16. The getter capsule 34 is disposed between the outer pipe 14 and the inner pipe 12 and is positioned to the side of the inner pipe 12. As will be described in detail below, during commissioning, the meltable seal 44 of the getter capsule 34 is melted so that the getter material is exposed to the vacuum chamber through an opening (in other words through the melted seal) in the getter capsule 34. The getter material removes molecules that outgas from the inner surfaces of the duct, thereby maintaining the vacuum at a level that provides sufficient thermal insulation for the inner pipe 12.

Since the vacuum port 18 is offset from the centreline of the inner pipe 12, the getter capsule 34 can extend within the vacuum chamber 16 between the inner and outer pipes 12, 14. Therefore, the height of the tubular section 20 of the vacuum port 18 can be minimised which minimises the profile of the duct section 10. If the vacuum port 18 was disposed in line with the centreline of the duct 10, as is conventional, the length of the vacuum port 18 would have to be extended in order to accommodate the getter capsule 34.

A method and apparatus which can be used for commissioning the duct section 10 will now be described.

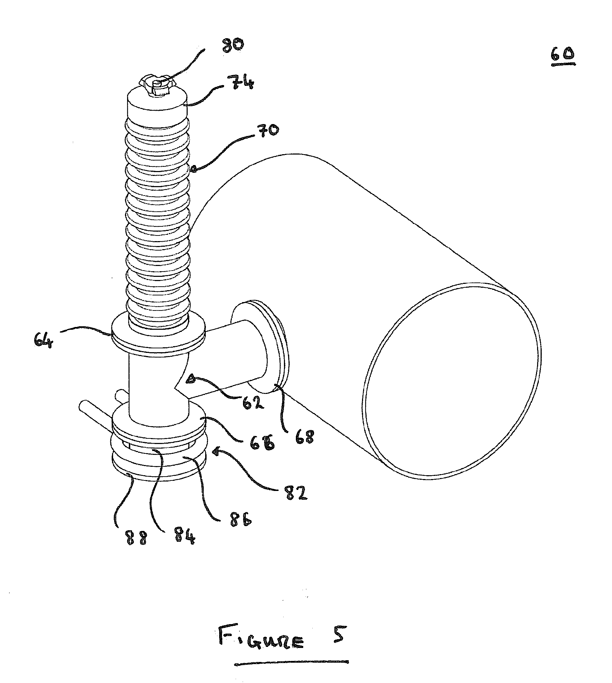

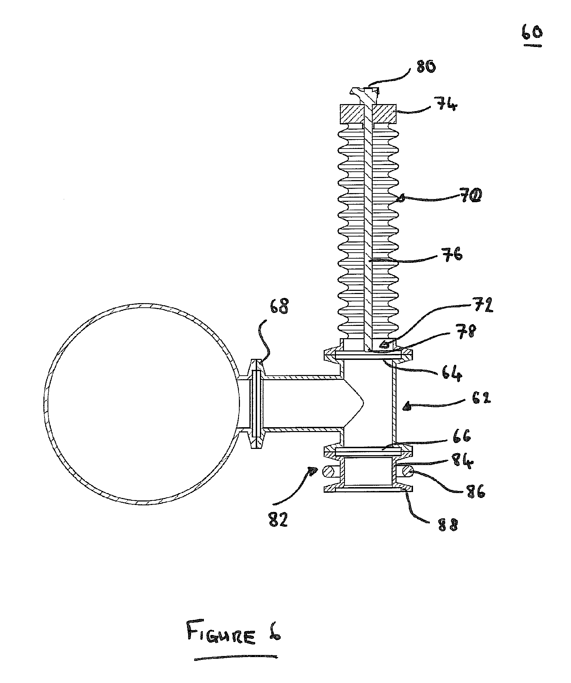

**Figures 5** **and** **6** show an apparatus 60 which can be used for degassing and sealing the duct section 10 described above. The apparatus 60 comprises a T-piece 62 having upper and lower coaxial ports 64, 66 and a vacuum source port 68 that is located between the two. The vacuum source port 68 is arranged to be attached to a vacuum source such as a vacuum pump.

A reinforced rubber bellows 70 having a variable axial length is attached to the upper port 64 and in this embodiment defines a plug chamber 72 on a first side of the vacuum source port 68. As will be described in detail below, the plug chamber 72 is arranged to accommodate the plug member 32 of the plug 30 in a retracted position in which it is on the first side of the vacuum source port 68. The bellows 70 is coaxial with the upper and lower ports 64, 66 and is sealed at its upper end 74. A rod 76 extends from the upper end 74 of the bellows 70 through the interior of the bellows 70 to a position towards the lower end thereof. The rod 76 is substantially coaxial with the bellows 70 and is provided with engagement means 78 which can be selectively engaged with a sealing plug 30. The upper end of the rod 76 is provided with an actuator in the form of a push button 80 which is disposed outside of the bellows 70 and which can be used to selectively engage the engagement means 78 with a plug 30.

A seal breaker in the form of a heater 82 is disposed on the second side of the vacuum port 68. The heater 82 is attached to the lower port 66 and comprises a short length of glass tube 84 having an induction coil 86 wrapped around the outer surface thereof. The glass tube 84 has upper and lower coaxial ports with the upper port being attached to the lower port 66 of the T-piece 62 and the lower port acting as a suction port 88 which is arranged to be attached to the vacuum port 18 of the duct section 10 which is to be degassed and sealed. The suction port 88 is therefore disposed on the second side of the vacuum port 68, on the opposite side to the plug chamber 72.

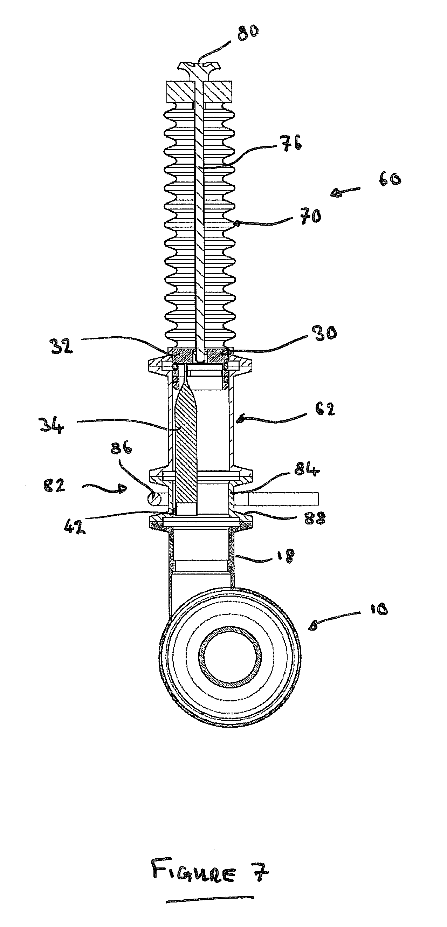

With reference to **Figure 7**, in use, the bellows 70 is compressed such that the distal end of the rod 76 extends from the suction port 88 and a plug 30, such as that described with reference to Figures 3 and 4, is attached to the rod 76 by engaging the engagement means 78 with the engagement portion 46 of the plug 30. The bellows 70 is then allowed to expand to the position shown in Figure 7 in which the plug 30 is disposed within the apparatus in a retracted position with the plug member 32 disposed on the first side of the vacuum source port 68 within the plug chamber 72. In the retracted position of the plug 30, the distal end 42 of the getter capsule 34 is located within the glass tube 84 of the heater 82 and is therefore within the heating zone that can be generated by the heater 82. The suction port 88 is then attached to the vacuum port 18 of the duct section 10 and the vacuum source port 68 is attached to a vacuum pump.

The vacuum pump is then operated to degas (or pump-down) the vacuum chamber 16 of the duct section 10 through the vacuum port 18. In order to reduce the time taken to pump-down the vacuum chamber 16, the inner and outer pipes 12, 14 are heated to around 250°C. This encourages the outgassing of hydrogen and other adsorbed gasses from the inner and outer pipes 12, 14 and is known as "bake-out". The vacuum chamber 16 is degassed until substantially all of the gas has been removed from the chamber 16. The duct section 10 can be heated to a temperature above the melting temperature of the meltable seal 44 of the getter capsule 34 without the risk of activating the getter early.

Once the vacuum chamber 16 has been degassed, the heater 82 is operated by passing a current through the induction coil 86 which generates a magnetic field. The magnetic field induces a current in the getter capsule 34 causing the getter capsule to be heated to around 160°C resulting in the meltable seal 44 of the getter capsule 34 melting. This unseals the getter capsule 34 as an opening is formed in the lower distal end 42 of the getter capsule 34. The getter material within the getter capsule 34 is therefore exposed to the vacuum within the vacuum chamber 16. Importantly, in the arrangement described above, the vacuum chamber 16 can be pumped-down and the bake-out process can be completed before melting the seal 44 and exposing the getter material.

In other embodiments, the breakable seal sealing the getter material within the getter capsule 34 may be a frangible seal. If a frangible seal is used, the apparatus for degassing and sealing may comprise a breaker that is used to break the frangible seal after degassing.

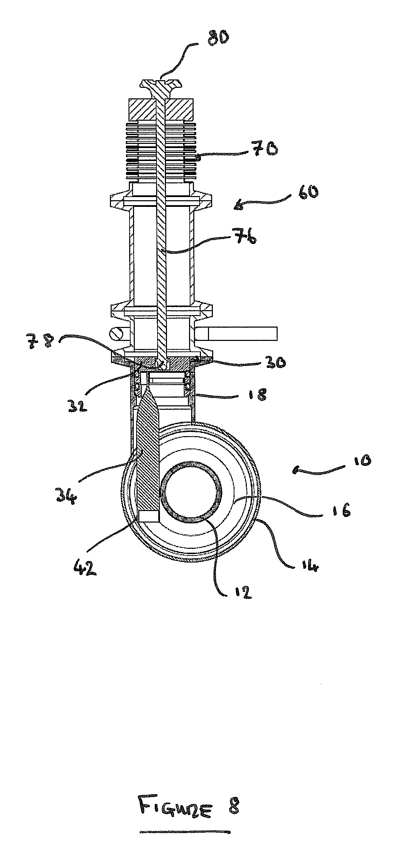

Referring now to **Figure 8**, after the meltable seal 44 has been melted to expose the getter material, the plug 30 is moved to an installed position. This is achieved by axially compressing the bellows 70 which causes the rod 76 to axially move the plug 30 from a position in which the plug member 32 is disposed within the plug chamber 72, to a position in which it is disposed within the vacuum port 18. The plug 30 is therefore moved from the first side of the vacuum source port 68, past the vacuum source port 68 and through the suction port 88 into the vacuum port 18. In the installed position, the plug member 32 seals the vacuum port 18 and the getter capsule 34 is disposed within the vacuum chamber 16 between the inner and outer pipes 12, 14. The getter material within the getter capsule 34 is exposed to the vacuum through an opening in the getter capsule 32 resulting from the melted seal 44. As described above, the getter material removes molecules that outgas from the inner surfaces of the duct, thereby maintaining the vacuum at a level that provides sufficient thermal insulation for the inner pipe 12.

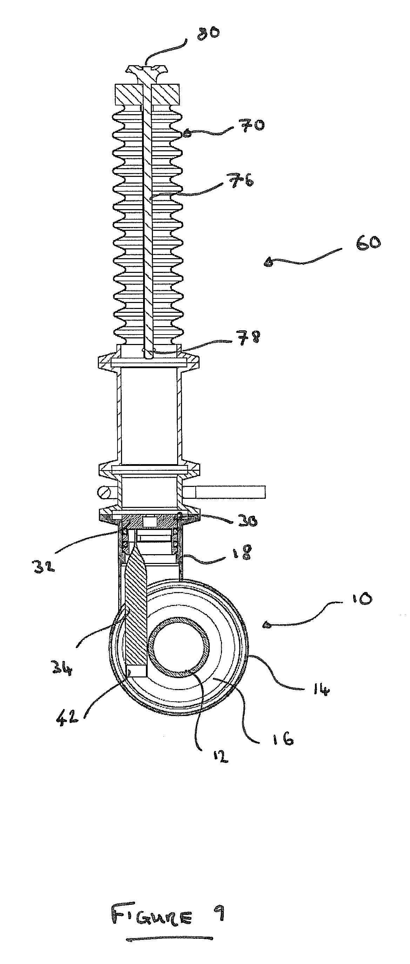

After the plug 30 has been installed, the button 80 of the rod 76 is depressed so that the distal end of the rod 76 is disengaged from the plug 30. The bellows 70 is then allowed to axially expand to the configuration shown in **Figure 9****.**

If necessary, for example if the vacuum in the vacuum chamber has failed, the plug 30 can be replaced with ease without the need for cutting the duct 10. A tool can be engaged with the engagement portion 46 of the plug member 32 which can then be withdrawn from the vacuum port 18. The vacuum chamber 16 can then be degassed and resealed by using the apparatus 60 of Figures 5 and 6 using a new plug 30 including a new getter capsule 34. This is particularly beneficial as it allows the duct section 10 to be serviced in situ without the need for cutting equipment. This may be particularly advantageous if the duct section 10 is part of a steam plant used in a "clean" environment.

Although it has been described that the apparatus 60 is used for degassing and sealing a vacuum insulated duct section 10, it should be appreciated that the apparatus could be used to seal any type of vacuum chamber having a vacuum port 18. Similarly, the plug 30 is suitable for sealing the vacuum port 18 of any vacuum chamber.

## Claims

1. A vacuum insulated duct section (10) for conveying a fluid, comprising:
an inner pipe (12) for conveying the fluid;
an outer pipe (14) enclosing the inner pipe (12) and defining a vacuum chamber (16) therebetween;
a vacuum port (18) leading to the vacuum chamber (16) through the outer pipe (14); and
a plug member (32) sealing the vacuum port (18) so as to maintain a vacuum within the vacuum chamber (16); **characterized by further comprising:**
a getter capsule (34) containing a getter material and which is attached to the plug member (32) such that it is disposed within the vacuum chamber (16), wherein the getter material is exposed to the vacuum chamber (16) through an opening in the getter capsule;
wherein the vacuum port (18) is offset from the inner pipe (12) so that the vacuum port axis (A) of the vacuum port is offset from a centreline (C) of the inner pipe (12).

2. A vacuum insulated duct section (10) according to claim 1, wherein the opening in the getter capsule (34) is a broken seal.

3. A vacuum insulated duct section (10) according to claim 2, wherein the opening has been formed by melting a meltable seal (44).

4. A vacuum insulated duct section (10) according to any preceding claim, wherein the getter capsule (34) comprises melted seal residue in the region of the opening.

5. A vacuum insulated duct section (10) according to any preceding claim, wherein the vacuum port axis (A) is offset from the centreline of the inner pipe (12) in a direction that is perpendicular to both the vacuum port axis (A) and the centreline (C).

6. A vacuum insulated duct section (10) according to any preceding claim, wherein the vacuum port axis (A) is generally perpendicular to the longitudinal centreline (C) of the inner pipe (12).

7. A vacuum insulated duct section (10) according to any preceding claim, wherein the getter capsule (34) is offset from a centreline (C) of the inner pipe (12) and is disposed to the side of the inner pipe (12).

8. A vacuum insulated duct section (10) according to any preceding claim, wherein the getter capsule (34) is elongate and has a length greater than the spacing between the inner and outer pipes (12, 14).

9. A vacuum insulated duct section (10) according to any preceding claim, wherein the getter capsule (34) is elongate and wherein a proximal end (40) of the getter capsule (34) is attached to the plug member (32).

10. A vacuum insulated duct section (10) according to claim 9, wherein the getter capsule (34) extends in the general axial direction from the plug member (32).

11. A vacuum insulated duct section (10) according to claim 10, wherein the axis of the getter capsule (34) is offset from the axis of the plug member (32).

12. A vacuum insulated duct section (10) according to any of claims 9-11, wherein the opening is provided at or towards the distal end (42) of the getter capsule (34).

13. A vacuum insulated duct section (10) according to any preceding claim, wherein the getter capsule (34) is detachably attached to the plug member (32).

## Patentansprüche

1. Vakuumisolierter Leitungsabschnitt (10) zur Beförderung eines Fluids, umfassend:
ein Innenrohr (12) zum Befördern des Fluids;
ein Außenrohr (14), das das Innenrohr (12) umschließt und zwischen diesen Rohren eine Vakuumkammer (16) definiert;
einen Vakuumanschluss (18), der durch das Außenrohr (14) zu der Vakuumkammer (16) führt; und
ein Stopfenelement (32), das den Vakuumanschluss (18) so abdichtet, dass in der Vakuumkammer (16) ein Vakuum aufrechterhalten wird; **dadurch gekennzeichnet, dass** er ferner Folgendes umfasst:
eine Getterkapsel (34), die ein Gettermaterial enthält und so an dem Stopfenelement (32) angebracht ist, dass sie in der Vakuumkammer (16) angeordnet ist, wobei das Gettermaterial der Vakuumkammer (16) durch eine Öffnung in der Getterkapsel ausgesetzt ist;
wobei der Vakuumanschluss (18) von dem Innenrohr (12) versetzt ist, so dass die Vakuumanschlussachse (A) des Vakuumanschlusses von einer Mittellinie (C) des Innenrohrs (12) versetzt ist.

2. Vakuumisolierter Leitungsabschnitt (10) nach Anspruch 1, wobei die Öffnung in der Getterkapsel (34) eine aufgebrochene Abdichtung ist.

3. Vakuumisolierter Leitungsabschnitt (10) nach Anspruch 2, wobei die Öffnung durch Schmelzen einer schmelzbaren Abdichtung (44) gebildet wurde.

4. Vakuumisolierter Leitungsabschnitt (10) nach einem der vorhergehenden Ansprüche, wobei die Getterkapsel (34) in dem Bereich der Öffnung einen geschmolzenen Abdichtungsrückstand umfasst.

5. Vakuumisolierter Leitungsabschnitt (10) nach einem der vorhergehenden Ansprüche, wobei die Vakuumanschlussachse (A) von der Mittellinie des Innenrohrs (12) in eine Richtung versetzt ist, die sowohl zu der Vakuumanschlussachse (A) als auch der Mittellinie (C) senkrecht verläuft.

6. Vakuumisolierter Leitungsabschnitt (10) nach einem der vorhergehenden Ansprüche, wobei die Vakuumanschlussachse (A) im Allgemeinen senkrecht zu der Längsachse (C) des Innenrohrs (12) verläuft.

7. Vakuumisolierter Leitungsabschnitt (10) nach einem der vorhergehenden Ansprüche, wobei die Getterkapsel (34) von einer Mittellinie (C) des Innenrohrs (12) versetzt ist und zu der Seite des Innenrohrs (12) angeordnet ist.

8. Vakuumisolierter Leitungsabschnitt (10) nach einem der vorhergehenden Ansprüche, wobei die Getterkapsel (34) länglich ist und eine Länge aufweist, die größer als der Abstand zwischen dem Innen- und dem Außenrohr (12, 14) ist.

9. Vakuumisolierter Leitungsabschnitt (10) nach einem der vorhergehenden Ansprüche, wobei die Getterkapsel (34) länglich ist, und wobei ein proximales Ende (40) der Getterkapsel (34) an dem Stopfenelement (32) angebracht ist.

10. Vakuumisolierter Leitungsabschnitt (10) nach Anspruch 9, wobei sich die Getterkapsel (34) in der allgemeinen Achsenrichtung von dem Stopfenelement (32) erstreckt.

11. Vakuumisolierter Leitungsabschnitt (10) nach Anspruch 10, wobei die Achse der Getterkapsel (34) von der Achse des Stopfenelements (32) versetzt ist.

12. Vakuumisolierter Leitungsabschnitt (10) nach einem der Ansprüche 9 bis 11, wobei die Öffnung an dem distalen Ende (42) der Getterkapsel (34) oder zu diesem hin bereitgestellt ist.

13. Vakuumisolierter Leitungsabschnitt (10) nach einem der vorhergehenden Ansprüche, wobei die Getterkapsel (34) abnehmbar an dem Stopfenelement (32) angebracht ist.

## Revendications

1. Section de conduit isolée sous vide (10) pour transporter un fluide, comprenant :
un tuyau intérieur (12) pour transporter le fluide ;
un tuyau extérieur (14) enfermant le tuyau intérieur (12) et définissant une chambre de vide (16) entre les deux ;
un raccord de vide (18) menant à la chambre de vide (16) par le tuyau extérieur (14) ; et
un élément obturateur (32) rendant le raccord de vide (18) étanche de façon à maintenir un vide dans la chambre de vide (16) ;
**caractérisée en ce qu'**elle comprend en outre :
une capsule d'adsorption (34) comportant une matière d'adsorption et qui est rattachée à l'élément obturateur (32) de façon qu'il soit exposé à la chambre de vide (16) par une ouverture dans la capsule d'adsorption,
le raccord de vide (18) étant décalé par rapport au tuyau intérieur (12) de façon que l'axe (A) du raccord de vide soit décalé de la ligne centrale (C) du tuyau intérieur (12).

2. Section de conduit isolée sous vide (10) selon la revendication 1, **caractérisée en ce que** l'ouverture dans la capsule d'adsorption (34) est un joint cassé.

3. Section de conduit isolée sous vide (10) selon la revendication 2, **caractérisée en ce que** l'ouverture a été formée en fondant un joint fusible (44).

4. Section de conduit isolée sous vide (10) selon l'une quelconque des revendications précédentes, **caractérisée en ce que** la capsule d'adsorption (34) comporte des restes de joint fondu dans la zone de l'ouverture.

5. Section de conduit isolée sous vide (10) selon l'une quelconque des revendications précédentes, **caractérisée en ce que** l'axe (A) du raccord de vide est décalé de la ligne centrale du tuyau intérieur (12) dans une direction perpendiculaire aussi bien à l'axe (A) du raccord de vide que de la ligne centrale (C).

6. Section de conduit isolée sous vide (10) selon l'une quelconque des revendications précédentes, **caractérisée en ce que** l'axe (A) du raccord de vide est d'une manière générale perpendiculaire à la ligne longitudinale centrale (C) du tuyau intérieur (12).

7. Section de conduit isolée sous vide (10) selon l'une quelconque des revendications précédentes, **caractérisée en ce que** la capsule d'adsorption (34) est décalée de la ligne centrale (C) du tuyau intérieur (12) et est situé du côté du tuyau intérieur (12).

8. Section de conduit isolée sous vide (10) selon l'une quelconque des revendications précédentes, **caractérisée en ce que** la capsule d'adsorption (34) est de forme allongée et présente une longueur supérieure à l'espacement entre les tuyaux intérieur et extérieur (12, 14).

9. Section de conduit isolée sous vide (10) selon l'une quelconque des revendications précédentes, **caractérisée en ce que** la capsule d'adsorption (34) est de forme allongée et **en ce qu'**une extrémité proximale (40) de la capsule d'adsorption (34) est attachée à l'élément obturateur (32).

10. Section de conduit isolée sous vide (10) selon la revendication 9, **caractérisée en ce que** la capsule d'adsorption (34) s'étend dans la direction générale axiale de l'élément obturateur (32).

11. Section de conduit isolée sous vide (10) selon la revendication 10, **caractérisée en ce que** l'axe de la capsule d'adsorption (34) est décalé de l'axe de l'élément obturateur (32) .

12. Section de conduit isolée sous vide (10) selon l'une quelconque des revendications 9 à 11, **caractérisée en ce que** l'ouverture est disposée à ou proche de l'extrémité distale (42) de la capsule d'adsorption (34).

13. Section de conduit isolée sous vide (10) selon l'une quelconque des revendications précédentes, **caractérisée en ce que** la capsule d'adsorption (34) est attachée de manière séparable à l'élément obturateur (32).
